# FASCICULE DE BREVET EUROPEEN

(11) **EP 4 022 363 B1**
(45) Date de publication et mention de la délivrance du brevet: **07.05.2025**
(21) Numéro de dépôt: 20808181.0
(22) Date de dépôt: 26.10.2020
(51) Int. Cl.: G02B 1/12, G02B 1/118

(54) **DISPOSITIF OPTIQUE**
OPTISCHE VORRICHTUNG
OPTICAL DEVICE

(30) Priorité: 24.10.2019 FR 1911937
(43) Date de publication de la demande: 06.07.2022
(73) Titulaire: HYDROMECANIQUE ET FROTTEMENT, 42160 Andrézieux-Bouthéon (FR); Université Jean Monnet Saint-Étienne, 42023 Saint-Étienne Cedex 2 (FR); Manutech-USD, 42000 Saint Etienne (FR); Centre National de la Recherche Scientifique, 75794 Paris (FR)
(72) Inventeur: KÄMPFE, Thomas, 69960 CORBAS (FR); DUBOST, Laurent, 42330 CHAMBOEUF (FR); SEDAO, Xxx, 42000 SAINT-ETIENNE (FR)
(74) Mandataire: Cabinet Laurent & Charras
(86) Numéro de dépôt international: PCT/FR2020/051934
(87) Numéro de publication internationale: WO 2021/079078

(56) Documents cités:
- EP-A1- 1 785 748
- WO-A1-2011/021752
- WO-A2-2010/056500
- DE-U1- 202011 110 173
- FR-A1- 2 975 506
- JP-A- 2008 058 438
- US-A1- 2008 074 748

## Description

### DOMAINE TECHNIQUE

La présente invention concerne un dispositif optique, adapté à la transmission ou à la réflexion d'un rayonnement dans une gamme de longueur d'onde prédéterminée, par exemple du type ultraviolet, visible, infrarouge ou micro-onde.

Le domaine de l'invention est celui des dispositifs optiques, conçus par exemple pour équiper les systèmes d'imagerie. En pratique, les applications dépendent de la gamme de longueur d'onde.

### ART ANTERIEUR

De manière connue, les effets antireflet ou miroir peuvent être obtenus par construction multicouche et/ou par structuration de dispositifs optiques.

Les documents suivants décrivent différents exemples de dispositifs optiques.
- EP3206059A1 décrit un dispositif diffractif large bande, comprenant une pluralité de zones élémentaires et de microstructures agencées pour former un matériau artificiel présentant une variation d'indice effectif à la surface du dispositif.
- BRUYNOOGHE (2016), "Broadband and wide-angle hybrid antireflection coatings prepared by combining interference multilayers with subwavelength structures", Journal of Nanophotonics, SPIE, International Society for Optics and Photonics. Ce document décrit une construction multicouche combinée avec des structures stochastiques réalisées par gravure sèche.
- KUBOTA (2014), "Optimization of hybrid antireflection structure integrating surface texturing and multi-layer interference coating", Thin Films for Solar and Energy Technology VI, Graduate School of Science and Engineering, Yamagata University, Japan. Ce document décrit l'étude théorique de la combinaison d'une construction multicouche et d'un réseau type oeil de mouche ("moth-eye" en anglais).
- CAMARGO (2012), "Multi-scale structured, superhydrophobic and wide-angle, antireflective coating in the near-infrared region", Chem. Commun., 2012, 48, 4992-4994, Royal Society of Chemistry, United Kingdom. Ce document décrit la structuration de plusieurs couches, avec un focus sur l'amélioration de certains comportements de surface.
- RALCHENKO (1999), "Fabrication of CVD Diamond Optics with Antireflective Surface Structures", phys. stat. sol., General Physics Institute, Moscow, Russia. Ce document décrit la structuration de diamant déposé par CVD pour arriver à un effet antireflet.

Le document US 2008/0074748 A1 décrit un dispositif optique de l'état de la technique.

### EXPOSE DE L'INVENTION

Le but de la présente invention est de proposer un dispositif optique, du type antireflet ou miroir, présentant des propriétés améliorées.

A cet effet, l'invention a pour objet le dispositif optique de la revendication 1.

Ainsi, l'invention permet de modifier de manière maîtrisée le front d'une onde électromagnétique.

La texturation permet de faire varier l'indice de réfraction effectif sur la surface du dispositif texturé. En particulier, la texturation permet d'obtenir des indices de réfraction effectifs plus faibles de manière maîtrisée, dans la couche de revêtement texturée et dans la zone texturée du substrat. La texturation permet d'obtenir des indices effectifs inatteignables directement en utilisant des multicouches. Les indices sont variables en fonction de la longueur d'onde du rayonnement.

Egalement, l'invention permet d'augmenter la gamme d'angle d'incidence pour laquelle la validité de la fonction optique est intéressante.

La structure du dispositif forme au moins un système bi-couches, comprenant la couche de revêtement texturée et la couche texturée du substrat, surmontant la partie non texturée du substrat.

Selon une première application, le dispositif optique a une fonction antireflet. Le dispositif est adapté à la transmission d'un rayonnement électromagnétique dans une gamme de longueur d'onde du spectre électromagnétique. Le dispositif comprend au moins un substrat réalisé dans un premier matériau transparent dans ladite gamme de longueur d'onde, une couche de revêtement réalisée dans un second matériau différent du premier matériau et également transparent dans ladite gamme de longueur d'onde, et une texturation de surface formant des cavités dans le dispositif. Le dispositif est caractérisé en ce que les cavités traversent la couche de revêtement et creusent partiellement le substrat.

De manière avantageuse, l'invention permet d'améliorer la transmission du dispositif, au niveau de la largeur spectrale et de la transmission maximale (donc absorption minimale), par rapport à un substrat non texturé et non revêtu ; un substrat texturé et non revêtu ; un substrat revêtu d'une couche de revêtement non texturée ; et même un substrat revêtu d'une couche de revêtement texturée, mais dont la texturation ne pénètre pas le substrat. Cette amélioration dépend de la configuration du dispositif, notamment des caractéristiques du couple substrat-revêtement et de la texturation.

En comparaison avec un substrat texturé et non revêtu, la couche de revêtement texturée permet d'améliorer la transmission en formant des cavités moins profondes. Ainsi, la texturation est plus facile et rapide à réaliser.

En comparaison avec un substrat revêtu d'une couche de revêtement non texturée, le comportement de surface du dispositif est modifié.

En pratique, le dispositif ne permet pas d'améliorer la transmission sur tout le spectre électromagnétique, mais est configuré pour une transmission sur une gamme de longueur d'onde dépendante des caractéristiques du couple substrat-revêtement et de la texturation.

Les gammes de longueur d'onde sont définies selon les subdivisions recommandées par la Commission internationale de l'éclairage (CIE) :
- Rayon gamma : inférieure à 10 pm
- Rayon X : 10 pm à 10 nm
- Ultraviolet : 10 nm à 380 nm
- Visible : 380 nm à 780 nm
- IR-A (IR proche) : 0,78 µm à 1,4 µm
- IR-B (IR moyen) : 1,4 µm à 3 µm
- IR-C (IR lointain) : 3 µm à 1 mm
- Ondes radioélectriques : supérieure à 1 mm

Pour la gamme IR, les subdivisions suivantes peuvent également être utilisées :
- NIR (IR proche) : 0,75 µm à 1,4 µm
- SWIR : 1,4 µm à 3 µm
- MWIR : 3 µm à 8 µm
- LWIR : 8 µm à 15 µm
- FIR (IR lointain) : 15 µm à 1 mm

En matière de transmission, les différentes variantes du dispositif ne sont pas forcément plus performantes que les dispositifs de l'état de la technique. Cependant, le dispositif selon l'invention présente d'autres avantages : simplicité de fabrication, tension de surface, etc.

Selon une deuxième application, le dispositif optique a une fonction miroir. Le dispositif est adapté à la réflexion d'un rayonnement électromagnétique dans une gamme de longueur d'onde du spectre électromagnétique. Le dispositif comprend au moins un substrat réalisé dans un premier matériau réfléchissant dans ladite gamme de longueur d'onde, une couche de revêtement réalisée dans un second matériau différent du premier matériau et également réfléchissant dans ladite gamme de longueur d'onde, et une texturation de surface formant des cavités dans le dispositif. Le dispositif est caractérisé en ce que les cavités traversent la couche de revêtement et creusent partiellement le substrat.

Ainsi, l'invention permet d'améliorer la réflexion du dispositif, par rapport à un substrat non texturé et non revêtu, un substrat texturé et non revêtu, ou un substrat revêtu d'une couche de revêtement non texturée.

Selon une variante, le dispositif optique a une fonction miroir, et comprend au moins un substrat réalisé dans un premier matériau transparent dans ladite gamme de longueur d'onde, une couche de revêtement réalisée dans un second matériau différent du premier matériau et également transparent dans ladite gamme de longueur d'onde, et une texturation de surface formant des cavités dans le dispositif. Le dispositif est caractérisé en ce que les cavités traversent la couche de revêtement et creusent partiellement le substrat.

En alternative (ou en combinaison avec les fonctions de réflectance et transmittance), le dispositif optique peut avoir une fonction de modification du front d'onde de surfaces optiques, différente des fonctions antireflet et miroir.

Selon d'autres caractéristiques avantageuses de l'invention, prises isolément ou en combinaison :
- Le substrat est la couche inférieure, et en ce que les cavités traversent la première couche de revêtement et creusent le substrat selon une partie de l'épaisseur.
- Le dispositif comprend deux couches de revêtement disposées sur le substrat, à savoir la première couche de revêtement et une deuxième couche de revêtement, et en ce que les cavités traversent la première couche de revêtement et creusent la deuxième couche de revêtement selon une partie de l'épaisseur, sans pénétrer dans le substrat.
- Le dispositif comprend plusieurs couches de revêtement empilées, incluant la première couche de revêtement et au moins une deuxième couche de revêtement.
- Les cavités traversent la première couche de revêtement et creusent la deuxième couche de revêtement selon une partie de l'épaisseur.
- Les cavités traversent toutes les couches de revêtement empilées et creusent le substrat selon une partie de l'épaisseur.
- Le cavités présentent une section d'aire strictement décroissante en direction du substrat.
- Le substrat a de préférence une épaisseur comprise entre 0,1 et 30 mm, par exemple de l'ordre de 1 ou 2 mm.
- La couche de revêtement a de préférence une épaisseur comprise entre 0,01 et 50 µm, par exemple de l'ordre de 0,5 µm ou 2 µm pour la gamme IR.
- Les cavités sont formées dans le substrat sur une profondeur comprise de préférence entre 0,5 et 10 µm, par exemple de l'ordre de 1 µm, pour la gamme IR lointain, au-delà de 3 µm.
- Les cavités sont formées dans le substrat sur une profondeur comprise de préférence entre 0,08 µm et 3 µm, par exemple de l'ordre de 200 nm, pour la gamme IR proche ou IR moyen entre 780 nm et 3 µm.
- Les cavités sont formées dans le substrat sur une profondeur comprise de préférence entre 1 nm à 600 nm, par exemple de l'ordre de 80 nm, pour la gamme visible.
- De préférence pour les applications IR, le substrat et la couche de revêtement sont transparents / réfléchissants pour toute la gamme de longueur d'onde comprise entre 1 µm et 50 µm.
- De préférence pour la gamme IR lointain comprise entre 8 µm et 12 µm, le dispositif permet une transmittance / réflectance d'au moins 90% du rayonnement infrarouge incident pour le dioptre considéré.
- Les caractéristiques des cavités (forme, dimensions, répartition, etc) dépendent de la technique de texturation et des paramètres utilisés.
- De préférence, les cavités ont une plus grande largeur ou un diamètre compris entre 0.02 et 3 µm, notamment entre 1 et 2 µm.
- Le matériau du substrat est par exemple du silicium Si, du germanium Ge, du sulfure de zinc ZnS, du séléniure de zinc ZnSe, etc, pour les applications IR.
- Le substrat présente généralement une structure cristalline.
- Le matériau de la couche de revêtement est par exemple du carbone amorphe DLC ("Diamond Like Carbon" en anglais), du silicium Si, du germanium Ge, du sulfure de zinc ZnS, du séléniure de zinc ZnSe, du pentoxyde de tantale Ta2O5, du dioxyde d'hafnium HfO2, de l'alumine Al2O3, etc.
- Le revêtement peut présenter une structure amorphe ou cristalline.
- La couche de revêtement peut être réalisée par une technique de dépôt de couche mince, telle que PVD ou CVD.
- La texturation peut être réalisée par tout type de technique adaptée pour traverser la couche de revêtement et creuser partiellement le substrat, par exemple ablation laser, photolithographie, nano-impression, etc. La texturation laser est relativement économique et bien maîtrisée.
- La texturation peut être réalisée par un laser ultra-bref, avec une durée d'impulsion dans le régime femtoseconde ou picoseconde. La longueur d'onde du laser, qui varie typiquement entre 200 à 16000 nm, est à choisir en fonction des caractéristiques de texturation souhaitées (forme et dimensions des cavités, motifs, etc).
- L'environnement opto-mécanique du laser comprend des platines motorisées, un objectif microscope (et/ou galvano scanner, et/ou monocouche micro-sphère), une unité de visualisation en ligne, etc.
- De préférence, les cavités ont un profil continu lors de la transition entre la couche de revêtement et le substrat. Ce profil continu peut être obtenu en formant les cavités dans la couche de revêtement et dans le substrat lors d'une même opération de texturation, par exemple une texturation laser. Un profil continu améliore la maitrise de la forme recherchée du front d'onde. En effet, des discontinuités peuvent générer de la diffraction ou d'autres effets non désirés.
- Les cavités ont un profil continu en direction du substrat.
- Les cavités peuvent avoir une section circulaire.
- Les cavités présentent une section d'aire strictement décroissante en direction du substrat.
- Les cavités peuvent présenter un profil concave dans un plan axial, avec une section d'aire décroissante selon la profondeur.
- Les cavités peuvent présenter un profil concave symétrique dans un plan axial.
- Les cavités peuvent présenter un profil concave asymétrique dans un plan axial.
- Les cavités peuvent présenter des dimensions différentes, notamment des diamètres, largeurs et/ou profondeurs différents.
- Les dimensions des cavités peuvent varier de manière périodique.
- Les dimensions des cavités présentent une périodicité variable, évoluant selon une règle définie et non de manière aléatoire.
- La périodicité variable évolue de manière régulière.
- Les cavités peuvent avoir une périodicité différente entre le centre et les bords du dispositif.
- Les cavités peuvent être plus rapprochées au centre du dispositif.
- Dans la couche de revêtement, les cavités ont une densité comprise entre 20 et 91%, c'est-à-dire un taux de remplissage de l'espace compris entre 20 et 91%. Le taux de 91% correspond aux cavités arrangées hexagonalement et qui se touchent.
- Le dispositif peut comprendre un unique substrat et une unique couche de revêtement. Dans ce cas, de préférence, le substrat a un indice de réfraction supérieur à l'indice de réfraction du revêtement avant texturation.
- Le dispositif peut comprendre un substrat et plusieurs couches de revêtement texturées. Dans ce cas, de préférence, le substrat a un indice de réfraction supérieur à l'indice de réfraction des revêtements avant texturation. En alternative, le substrat peut avoir un indice de réfraction inférieur à au moins l'une des couches de revêtement.
- Le dispositif comprend au moins une couche arrière réalisée dans un matériau différent du substrat et du revêtement, la première couche de revêtement étant formée sur un premier côté du substrat, la couche arrière étant formée sur un second côté du substrat opposé au premier côté.
- La couche arrière est par exemple réalisée en sulfure de zinc ZnS, ou d'autres matériaux mentionnés plus haut pour le substrat ou la couche de revêtement.
- Le dispositif peut comprendre deux faces, avec chacune une couche de revêtement et une texturation de surface formant des cavités traversant la couche de revêtement et pénétrant partiellement le substrat.
- Le dispositif peut comprendre une première face avec une première couche de revêtement et une texturation de surface formant des cavités traversant la première couche de revêtement et pénétrant partiellement le substrat, et une deuxième face avec une autre couche de revêtement qui peut être dépourvue de texturation conforme à l'invention, ou bien recevoir un traitement différent de la texturation de la première face, ou bien ne recevoir aucun traitement.
- Les couches de revêtement des deux faces peuvent être différentes (matériau, épaisseur, etc).
- Les faces du dispositif peuvent être parallèles ou non. Par exemple, les faces peuvent être disposées dans des plans inclinés. Selon un autre exemple, les faces peuvent être concaves ou convexes.

L'invention a également pour objet le procédé de fabrication de la revendication 12.

L'invention peut trouver de nombreuses applications dans le domaine des dispositifs optiques :
- Applications IR : caméra, lentille, fenêtre optique, surface de camouflage, leurre, etc.
- Applications visible et proche IR : fenêtres optiques, lentilles, miroirs, pour caméras dispositifs d'imagerie, lignes de laser, mise en forme de faisceau, etc.
- Applications ondes radioélectriques : radar, etc.

### BREVE DESCRIPTION DES DESSINS

L'invention sera mieux comprise à la lecture de la description qui va suivre, donnée uniquement à titre d'exemple non limitatif et faite en référence aux dessins annexés sur lesquels :
[Fig 1] est une représentation schématique en coupe d'un dispositif, comprenant un substrat en silicium Si, une couche de revêtement en carbone amorphe DLC, et une texturation formant des cavités dans le dispositif les cavités traversant la couche de revêtement et creusant partiellement le substrat.
[Fig 2] est une coupe analogue à la figure 1, montrant un dispositif constitué par un substrat Si et un revêtement DLC non texturés.
[Fig 3] est une coupe analogue à la figure 1, montrant un dispositif constitué par un substrat Si texturé et non revêtu.
[Fig 4] est une coupe analogue à la figure 1, montrant un dispositif constitué par un substrat Si non texturé et un revêtement DLC texturé.
[Fig 5] est une coupe analogue à la figure 1, montrant un dispositif constitué par un substrat Si non texturé et non revêtu.
[Fig 6] est une représentation schématique en vue de dessus, du dispositif de la figure 1.
[Fig 7] est un graphe montrant l'évolution de la transmission (T de 0 à 1) en fonction de la longueur d'onde (WL de 3 à 15 µm), pour chacun des dispositifs des figures 1 à 5.
[Fig 8] est un graphe montrant l'évolution de la transmission (T en %) en fonction de l'angle d'incidence (Angle de 0 à 80°) du rayonnement à la surface du dispositif, pour les dispositifs des figures 1 et 2.
[Fig 9] est un graphe analogue à la figure 8, montrant l'évolution de la transmission (T en %) en fonction de l'angle d'incidence (Angle de 0 à 60°) pour les dispositifs des figures 1 et 2.
[Fig 10] est un diagramme montrant l'évolution de la transmission (T en %) en fonction de la longueur d'onde (WL de 3 à 15 µm) et de l'angle d'incidence (Angle de 0 à 80°), pour le dispositif de la figure 1, conforme à l'invention.
[Fig 11] est un diagramme analogue à la figure 10, pour le dispositif de la figure 2.
[Fig 12] est un graphe analogue à la figure 7, montrant l'évolution de la transmission (T de 0,7 à 1) en fonction de la longueur d'onde (WL de 0,8 à 3 µm), pour cinq dispositifs différents, configurés comme sur les figures 1 à 5, avec un substrat en séléniure de zinc ZnSe et pour certains une couche de revêtement en dioxyde de silicium SiO2.
[Fig 13] est un graphe analogue à la figure 9, pour deux dispositifs dont la transmission est représentée sur la figure 12, à savoir un dispositif conforme à l'invention comprenant un substrat et un revêtement texturés, et un dispositif comprenant un substrat et un revêtement non texturés.
[Fig 14] est un graphe analogue à la figure 7, montrant l'évolution de la transmission (T de 0,96 à 1) en fonction de la longueur d'onde (WL de 0,3 à 1 µm), pour cinq dispositifs différents, configurés comme sur les figures 1 à 5, avec un substrat en dioxyde de silicium SiO2 et pour certains une couche de revêtement en fluorure de magnésium MgF2.
[Fig 15] est un graphe analogue à la figure 9, pour deux dispositifs dont la transmission est représentée sur la figure 14, à savoir un dispositif conforme à l'invention comprenant un substrat et un revêtement texturés, et un dispositif non conforme à l'invention comprenant un substrat et un revêtement non texturés.
[Fig 16] est un graphe analogue à la figure 7, montrant l'évolution de la transmission (T de 0,966 à 1) en fonction de la longueur d'onde (WL de 0,3 à 1 µm), pour cinq dispositifs différents, configurés comme sur les figures 1 à 5, avec un substrat en alumine Al2O3 et pour certains une couche de revêtement en dioxyde de silicium SiO2.
[Fig 17] est une représentation schématique en vue de dessus d'une variante de dispositif conforme à l'invention, dont les cavités présentent une périodicité variable sur la surface du dispositif, en étant plus rapprochées au centre que sur les bords du dispositif.
[Fig 18] est une coupe analogue à la figure 2, montrant une variante de dispositif conforme à l'invention, les cavités ayant un profil concave symétrique, avec une section décroissante selon la profondeur, et non un profil cylindrique.
[Fig 19] est une coupe analogue à la figure 2, montrant une variante de dispositif conforme à l'invention, les cavités ayant un profil concave asymétrique.
[Fig 20] est une coupe analogue à la figure 2, montrant une variante de dispositif conforme à l'invention, les cavités ayant des profondeurs variables.
[Fig 21] est une coupe analogue à la figure 2, montrant une variante de dispositif conforme à l'invention, les cavités ayant des diamètres variables.
[Fig 22] est une coupe analogue à la figure 2, montrant une variante de dispositif conforme à l'invention, comprenant un empilement de quatre couches de revêtement, les cavités étant formées uniquement dans les deux premières couches de revêtement.
[Fig 23] est une coupe analogue à la figure 2, montrant une variante de dispositif conforme à l'invention, comprenant un empilement quatre deux couches de revêtement, les cavités traversant entièrement l'empilement excepté la dernière couche, qui est creusée partiellement.
[Fig 24] est une coupe analogue à la figure 2, montrant une variante de dispositif conforme à l'invention, comprenant une couche arrière réalisée dans un matériau différent du substrat et du revêtement.
[Fig 25] est une coupe analogue à la figure 2, montrant une variante de dispositif conforme à l'invention, avec deux faces comprenant chacune un substrat, une couche de revêtement et une texturation de surface formant des cavités traversant la couche de revêtement et pénétrant partiellement le substrat.
[Fig 26] est une coupe analogue à la figure 2, montrant une variante de dispositif conforme à l'invention, avec une première face comprenant une couche de revêtement et une texturation de surface formant des cavités traversant la couche de revêtement et pénétrant partiellement le substrat, et une deuxième face comprenant une couche de revêtement dépourvue de texturation, dépourvue de traitement, ou recevant un traitement différent de la texturation de la première face.
[Fig 27] est une coupe analogue à la figure 2, montrant une variante de dispositif conforme à l'invention, avec un substrat central, et deux faces comprenant chacune deux couches de revêtement et une texturation.
[Fig 28] est un schéma illustrant la réversibilité du dispositif.
[Fig 29] est un schéma illustrant l'équivalence optique d'un dispositif complexe et de deux dispositifs simples.
[Fig. 30] est une coupe analogue à la figure 2, montrant une variante de dispositif conforme à l'invention, comprenant un empilement de quatre couches de revêtement en alternance ainsi qu'une couche de substrat, les cavités traversant la première couche de revêtement et creusant partiellement la deuxième couche de revêtement selon sa profondeur.
[Fig 31] est un graphe analogue à la figure 7, montrant l'évolution de la transmission (T) en fonction de la longueur d'onde (WL de 340 à 840 nm), pour trois dispositifs différents, à savoir un dispositif constitué d'une unique couche de ZnSe, et deux dispositifs avec un empilement en alternance de deux couches de revêtement en SiO2 et deux couches de revêtement en HfO2 déposées sur un substrat en ZnSe, dont un dispositif texturé et un dispositif non texturé.
[Fig 32] est un graphe analogue à la figure 7, montrant l'évolution de la transmission (T) en fonction de la longueur d'onde (WL de 1 à 2,4 µm), pour trois dispositifs différents, à savoir un dispositif constitué d'une unique couche de ZnSe, et deux dispositifs avec un empilement en alternance de deux couches de revêtement en Si3N4 et deux couches de revêtement en SiO2 déposées sur un substrat en ZnSe, dont un dispositif texturé et un dispositif non texturé.
[Fig 33] est un graphe analogue à la figure 9, pour les deux dispositifs multicouches dont la transmission est représentée sur la figure 32.
[Fig 34] est un graphe analogue à la figure 7, montrant l'évolution de la transmission (T) en fonction de la longueur d'onde (WL de 7 à 15 µm), pour trois dispositifs différents, à savoir un dispositif constitué d'une unique couche de Si, et dont deux dispositifs avec un empilement en alternance de deux couches de revêtement en TiO2 et deux couches de revêtement en DLC, déposées sur un substrat en Si, dont un dispositif texturé et un dispositif non texturé.
[Fig 35] est un graphe analogue à la figure 9, pour les deux dispositifs multicouches dont la transmission est représentée sur la figure 34.
[Fig 36] est un graphe analogue à la figure 7, montrant l'évolution de la transmission (T) en fonction de la longueur d'onde (WL de 7 à 15 µm), pour trois dispositifs différents, à savoir un dispositif constitué d'une unique couche de Si, et deux dispositifs avec un empilement en alternance de deux couches de revêtement en TiO2 et deux couches de revêtement en DLC, déposées sur un substrat en Si, dont un dispositif texturé et un dispositif non texturé.
[Fig 37] est un graphe analogue à la figure 9, pour les deux dispositifs multicouches dont la transmission est représentée sur la figure 36.

### DESCRIPTION DETAILLEE DE L'INVENTION

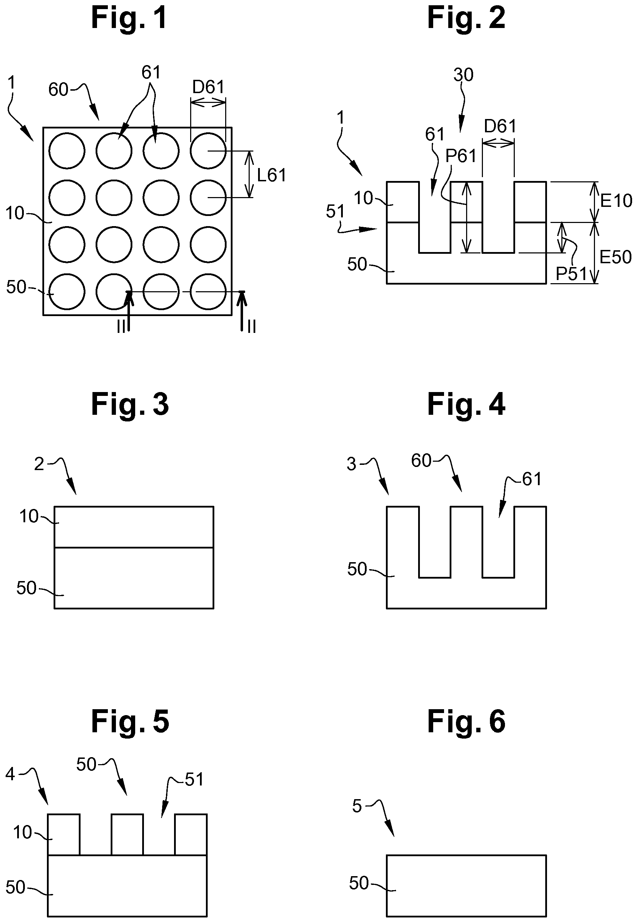

Sur les figures 1 et 6 est représenté un dispositif (1) optique antireflet.

Le dispositif (1) est bien adapté à la transmission d'un rayonnement électromagnétique dans une gamme de longueur d'onde IR lointain, entre 7 et 15 µm (LWIR).

Le dispositif (1) comprend une couche de revêtement (10) en carbone amorphe, aussi nommé DLC, avec une épaisseur (E20) de 1425 nm. Le DLC a un indice de réfraction n = 1,8 et est transparent dans la gamme de longueur d'onde susmentionnée.

Le dispositif (1) comprend un substrat (50) en silicium Si, avec par exemple une épaisseur (E10) de 1 ou 2 mm. Le substrat (50) a un indice de réfraction n = 3,43 et est transparent dans la gamme de longueur d'onde susmentionnée. La couche de revêtement (10) est déposée sur le substrat (50).

Le dispositif (1) comprend une texturation de surface (60) formant des cavités (61) distinctes, qui traversent la couche de revêtement (10) et creusent partiellement le substrat (50). Les cavités (61) sont réparties selon un réseau régulier sur la surface du dispositif (1). Les cavités (61) ont une périodicité (L61) de 2 µm, un diamètre (D61) de 1,6 µm, et une profondeur (P61) de l'ordre de 2,34 µm. Les cavités (61) pénètrent dans le substrat (50), dans une couche texturée (51) ayant une profondeur (P51) de 915 nm, très inférieure à l'épaisseur (E50) du substrat (50). La texturation (60) permet d'abaisser l'indice de réfaction effectif dans la couche texturée (51) du substrat (50), de manière maîtrisée.

La texturation (60) peut être réalisée par tout type de technique adaptée pour traverser la couche de revêtement (10) et creuser partiellement le substrat (10), par exemple ablation laser, photolithographie, nano-impression, etc. La texturation laser est relativement économique et bien maîtrisée. En particulier, la texturation (60) peut être réalisée par un laser ultra-bref, avec une durée d'impulsion dans le régime femtoseconde ou picoseconde. La longueur d'onde du laser, qui varie typiquement entre 200 à 16000 nm, est à choisir en fonction des caractéristiques de texturation (60) souhaitées, telles que la forme et les dimensions des cavités (61), motifs, périodicité, etc.

Les références suivantes peuvent être consultées pour paramétrer le système laser :
- YU (2013), "Femtosecond laser nanomachining initiated by ultraviolet multiphoton ionization", Optics Express.
- SEDAO (2012), "Large area laser surface micro/nanopatterning by contact microsphere lens arrays", Applied Physics A.

Sur les figures 2 à 5 sont représentés différents dispositifs (2, 3, 4, 5) non conformes à l'invention. Hormis les différences détaillées ci-après, la couche de revêtement (10), le substrat (50) et la texturation (60) ont les mêmes caractéristiques que pour le dispositif (1) décrit plus haut.

Sur la figure 2, le dispositif (2) est constitué par un substrat (50) en silicium Si et un revêtement (10) en DLC, non texturés.

Sur la figure 3, le dispositif (3) est constitué par un substrat (50) en silicium Si texturé, mais non revêtu. Le substrat (50) du dispositif (3) a la même épaisseur que le dispositif (1). Les cavités (61) ont la même profondeur (P61) pour les deux dispositifs (1, 3).

Sur la figure 4, le dispositif (4) est constitué par un substrat (50) en silicium Si non texturé et un revêtement (10) en DLC texturé. Les cavités (61) traversent le revêtement (10), mais ne pénètrent pas dans le substrat (50).

Sur la figure 5, le dispositif (5) est constitué par un substrat (50) en Si non texturé et non revêtu. Le substrat (50) du dispositif (3) a la même épaisseur que le substrat (50) du dispositif (1).

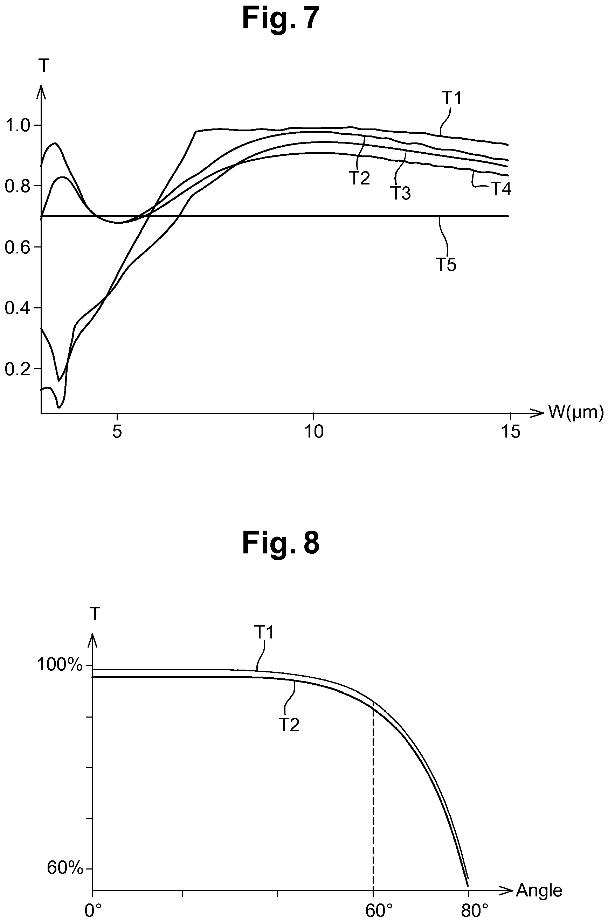

Sur la figure 7, le graphe comporte cinq courbes montrant l'évolution de la transmission (T1, T2, T3, T4, T5) en fonction de la longueur d'onde (WL), pour les dispositifs (1, 2, 3, 4, 5). En abscisses, la longueur d'onde (WL) varie entre 3 à 15 µm. En ordonnées, la transmission (T) varie de 0 à 1.
- La courbe de transmission (T1) correspond au dispositif (1) selon l'invention, montré aux figures 1 et 6.
- La courbe de transmission (T2) correspond au dispositif (2) montré à la figure 2.
- La courbe de transmission (T3) correspond au dispositif (3) montré à la figure 3.
- La courbe de transmission (T4) correspond au dispositif (4) montré à la figure 4.
- La courbe de transmission (T5) correspond au dispositif (5) montré à la figure 5.

Comme montré sur le graphe de la figure 7, la transmission (T1) du dispositif (1) est améliorée par rapport à chacun des dispositifs (2, 3, 4, 5), au niveau de la largeur spectrale et de la transmission maximale (donc absorption minimale).

Les transmissions (T1, T3) présentent une coupure vers 3 à 5 µm, possiblement liée à la profondeur des cavités (61) pénétrant dans le substrat (50).

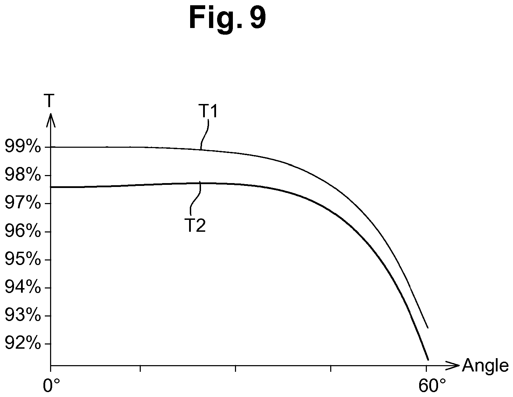

Sur les figures 8 et 9, les graphes comportent deux courbes montrant l'évolution de la transmission (T1, T2) en fonction de l'angle d'incidence (Angle), pour les dispositifs (1, 2). On constate que la largeur angulaire de transmission est plus importante pour le dispositif (1) que pour le dispositif (2).

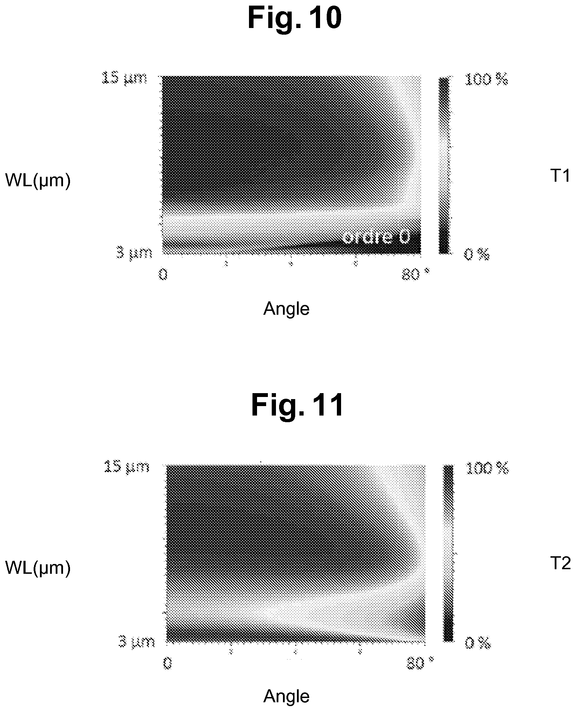

Sur les figures 10 et 11, les diagrammes montrent l'évolution de la transmission (T1, T2) en fonction de la longueur d'onde (WL et de l'angle d'incidence (Angle). L'évolution de la transmission (T1, T2) est représentée en deux dimensions, par des nuances de couleurs. On constate que la plage de transmission est plus importante pour le dispositif (1) que pour le dispositif (2), excepté pour les longueurs d'onde (WL) aux environs de 3 à 5 µm.

La structure du dispositif (1) forme un système bi-couches, comprenant une couche de revêtement (10) texturée et une couche texturée (51) du substrat (50), surmontant la partie non texturée du substrat (50).

Grâce à la texturation (60), la structure du dispositif (1) permet d'obtenir des performances antireflet améliorées par rapport aux dispositifs (2, 3, 4, 5).

Les performances antireflet du dispositif (1) sont comparables à celles des systèmes multicouches comportant plusieurs couches de revêtement superposées. La réalisation de la texturation (60) est particulièrement avantageuse lorsque l'application de revêtements multicouches n'est pas possible, pratique ou souhaitable.

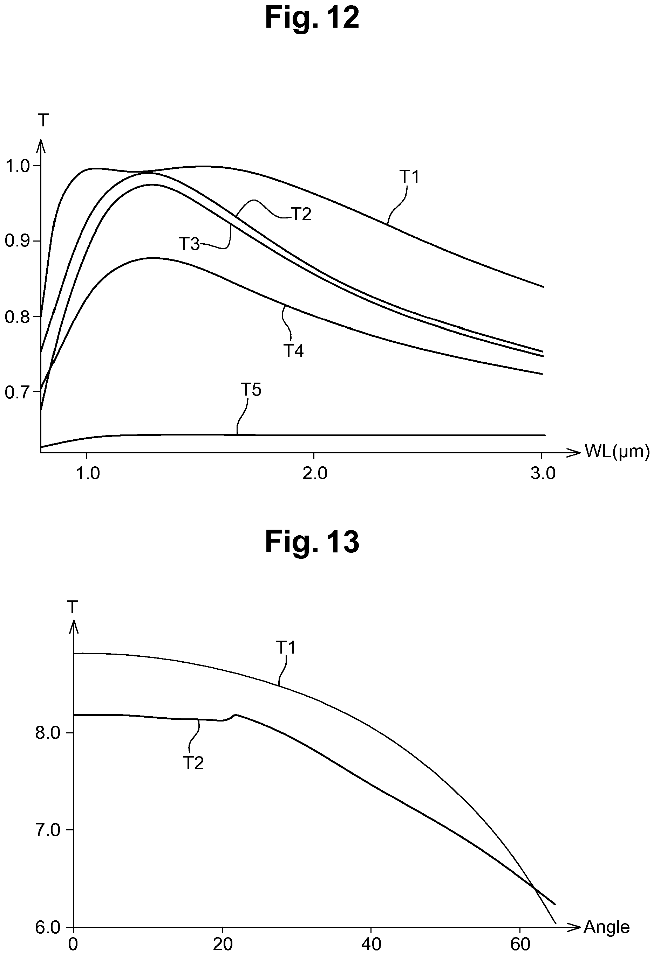

Sur la figure 12 est représenté un graphe analogue à la figure 7, montrant l'évolution de la transmission (T1, T2, T3, T4, T5), pour cinq dispositifs (1, 2, 3, 4, 5) configurés comme sur les figures 1 à 5, avec une couche de revêtement (10) en dioxyde de silicium SiO2 déposée sur un substrat (50) en séléniure de zinc ZnSe. En abscisses, la longueur d'onde (WL) varie de 0,8 à 3 µm, dans la gamme IR proche et moyen. En ordonnées, la transmission (T) varie de 0,7 à 1.

Pour les dispositifs (1, 2, 3, 4, 5), le substrat (50) en séléniure de zinc ZnSe a un indice de réfraction n = 2,46.

Pour les dispositifs (1, 2, 4), la couche de revêtement (10) en dioxyde de silicium SiO2 a une épaisseur (E10) de 230 nm et un indice de réfraction n = 1,44.

Pour les dispositifs (1, 3, 4), les cavités (61) ont une périodicité (L61) de 320 nm et un diamètre (D61) de 265 nm.

Pour les dispositifs (1, 4), les cavités (61) ont une profondeur (P61) de l'ordre de 400 nm.

Le dispositif (1) est bien adapté à la transmission d'un rayonnement électromagnétique dans une gamme de longueur d'onde IR proche et moyen, entre 0,8 et 3 µm.

Comme montré sur le graphe de la figure 12, la transmission (T1) du dispositif (1) est améliorée par rapport à chacun des dispositifs (2, 3, 4, 5), au niveau de la largeur spectrale et de la transmission maximale (donc absorption minimale).

Sur la figure 13, le graphe comporte deux courbes montrant l'évolution de la transmission (T1, T2) en fonction de l'angle d'incidence (Angle), pour les dispositifs (1, 2) décrits ci-dessus en ligne avec la figure 12. On constate que la largeur angulaire de transmission est plus importante pour le dispositif (1) que pour le dispositif (2).

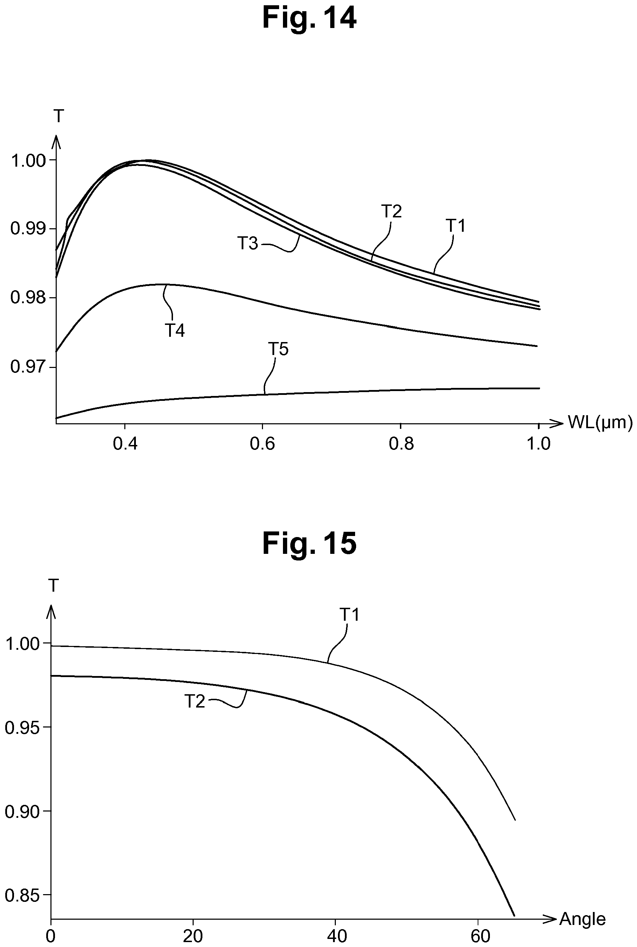

Sur la figure 14 est représenté un graphe analogue à la figure 7, montrant l'évolution de la transmission (T1, T2, T3, T4, T5), pour cinq dispositifs (1, 2, 3, 4, 5) configurés comme sur les figures 1 à 5, avec une couche de revêtement (10) en fluorure de magnésium MgF2 déposée sur un substrat (50) en dioxyde de silicium SiO2. En abscisses, la longueur d'onde (WL) varie de 0,3 à 1 µm, dans la gamme visible, IR proche et moyen. En ordonnées, la transmission (T) varie de 0,96 à 1.

Pour les dispositifs (1, 2, 3, 4, 5), le substrat (50) en dioxyde de silicium SiO2 a un indice de réfraction n = 1,44.

Pour les dispositifs (1, 2, 4), la couche de revêtement (10) en fluorure de magnésium MgF2 a une épaisseur (E20) de 57 nm et un indice de réfraction n = 1,38.

Pour les dispositifs (1, 3, 4), les cavités (61) ont une périodicité (L61) de 202 nm et un diamètre (D61) de 160 nm.

Pour les dispositifs (1, 4), les cavités (61) ont une profondeur (P61) de l'ordre de 94 nm.

Le dispositif (1) est bien adapté à la transmission d'un rayonnement électromagnétique dans une gamme de longueur d'onde visible, entre 0,38 et 0,78 µm.

Comme montré sur le graphe de la figure 14, la transmission (T1) du dispositif (1) est améliorée par rapport aux transmissions (T2, T5) des dispositifs (2, 5), au niveau de la largeur spectrale et de la transmission maximale (donc absorption minimale). En revanche, la transmission (T1) du dispositif (1) est relativement proche des transmissions (T3, T4) des dispositifs (3, 4).

Sur la figure 15, le graphe comporte deux courbes montrant l'évolution de la transmission (T1, T2) en fonction de l'angle d'incidence (Angle), pour les dispositifs (1, 2) décrits ci-dessus en ligne avec la figure 14. On constate que la largeur angulaire de transmission est plus importante pour le dispositif (1) que pour le dispositif (2).

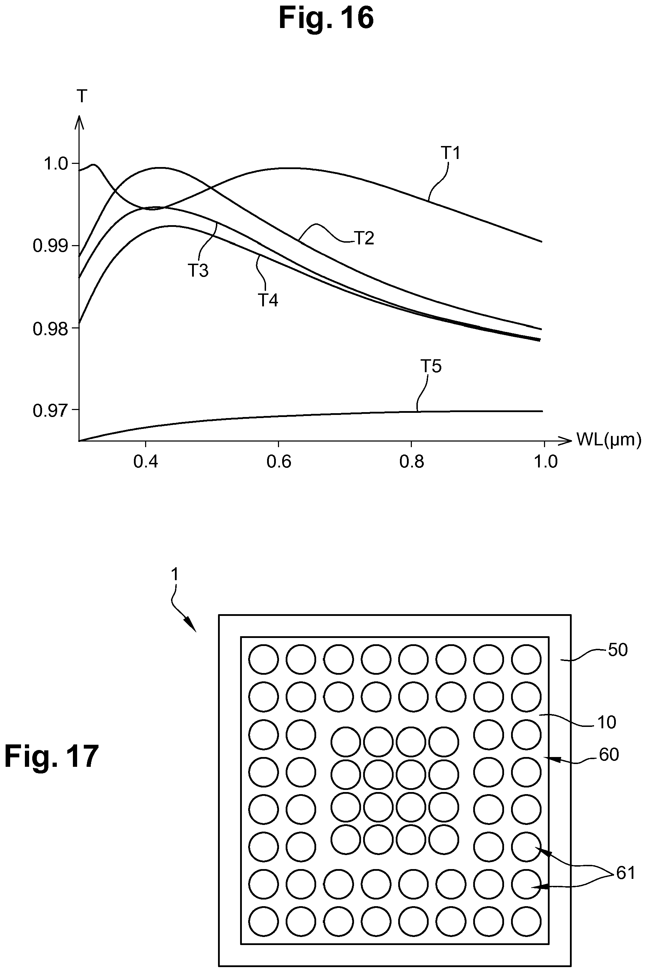

Sur la figure 16 est représenté un graphe analogue à la figure 7, montrant l'évolution de la transmission (T1, T2, T3, T4, T5), pour cinq dispositifs (1, 2, 3, 4, 5) configurés comme sur les figures 1 à 5, avec une couche de revêtement (10) en dioxyde de silicium SiO2 déposée sur un substrat (50) en alumine Al2O3. En abscisses, la longueur d'onde (WL) varie de 0,3 à 1 µm, dans la gamme visible, IR proche et moyen. En ordonnées, la transmission (T) varie de 0,96 à 1.

Pour les dispositifs (1, 2, 3, 4, 5), le substrat (50) en alumine Al2O3 a un indice de réfraction n = 1,69.

Pour les dispositifs (1, 2, 4), la couche de revêtement (10) en dioxyde de silicium SiO2 a une épaisseur (E20) de 83 nm et un indice de réfraction n = 1,44.

Pour les dispositifs (1, 3, 4), les cavités (61) ont une périodicité (L61) de 176 nm et un diamètre (D61) de 159 nm.

Pour les dispositifs (1, 4), les cavités (61) ont une profondeur (P61) de l'ordre de 156 nm.

Le dispositif (1) est bien adapté à la transmission d'un rayonnement électromagnétique dans une gamme de longueur d'onde visible, IR proche et moyen, entre 0,3 et 1 µm.

Comme montré sur le graphe de la figure 16, la transmission (T1) du dispositif (1) est améliorée par rapport à chacun des dispositifs (2, 3, 4, 5), au niveau de la largeur spectrale et de la transmission maximale (donc absorption minimale), en particulier pour une gamme de longueur d'onde IR proche et moyen.

D'autres variantes d'un dispositif (1) conforme à l'invention sont montrés aux figures 17 à 37. Dans un but de simplification, les éléments constitutifs comparables à ceux du premier mode de réalisation décrit plus haut portent les mêmes références numériques.

Sur la figure 17, conformément à l'invention, les cavités (61) sont réparties à la surface du dispositif (1) avec une périodicité variable. Cette périodicité variable évolue selon une règle définie et non de manière aléatoire. Les cavités (61) sont distinctes et non en communication les unes avec les autres. Les variations sont maîtrisées, elles ne sont pas dues à un état de surface irrégulier du dispositif (1) et/ou aux imprécisions du procédé de texturation. La périodicité est différente entre le centre et les bords du dispositif (1). Les cavités (61) sont plus rapprochées au centre que sur les bords.

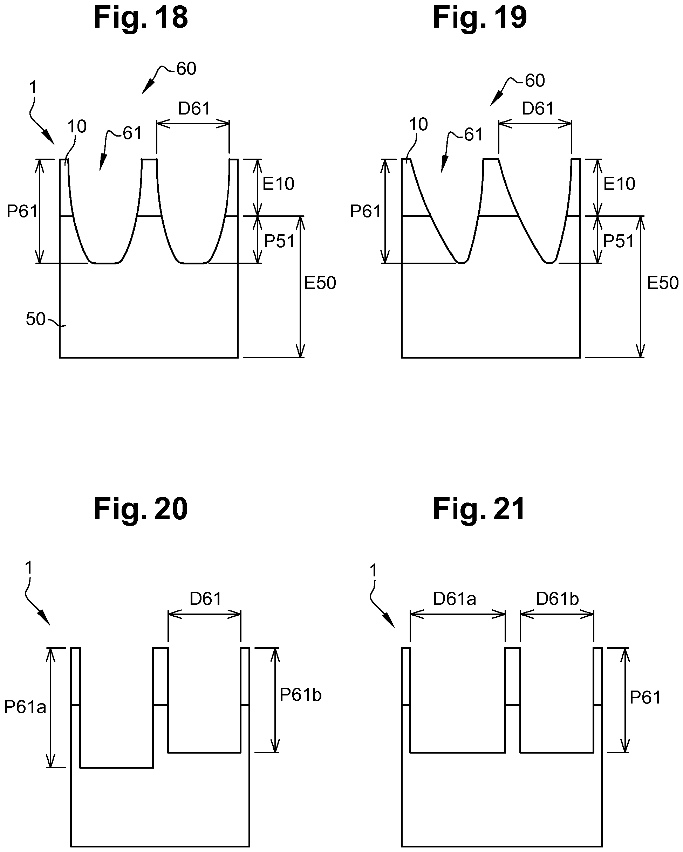

Sur la figure 18, les cavités (61) présentent un profil concave symétrique dans un plan axial, avec un diamètre (D61) et une section d'aire décroissante avec la profondeur (P61).

Sur la figure 19, les cavités (61) présentent un profil concave asymétrique dans un plan axial, avec une plus grande dimension (D61) et une section d'aire décroissante avec la profondeur (P61). Si la section est circulaire, la plus grande dimensions (D61) est un diamètre, sinon pour une section non circulaire, la plus grande dimensions (D61) est une longueur. En pratique, la texturation (30) produit des effets optiques différents selon l'orientation du rayonnement incident. Ce phénomène est renforcé par l'asymétrie des cavités (61).

Sur la figure 20, les cavités (61) présentent des profondeurs (P61a, P61b) différentes.

Sur la figure 21, les cavités (61) présentent des diamètres (D61a, D61b) différents.

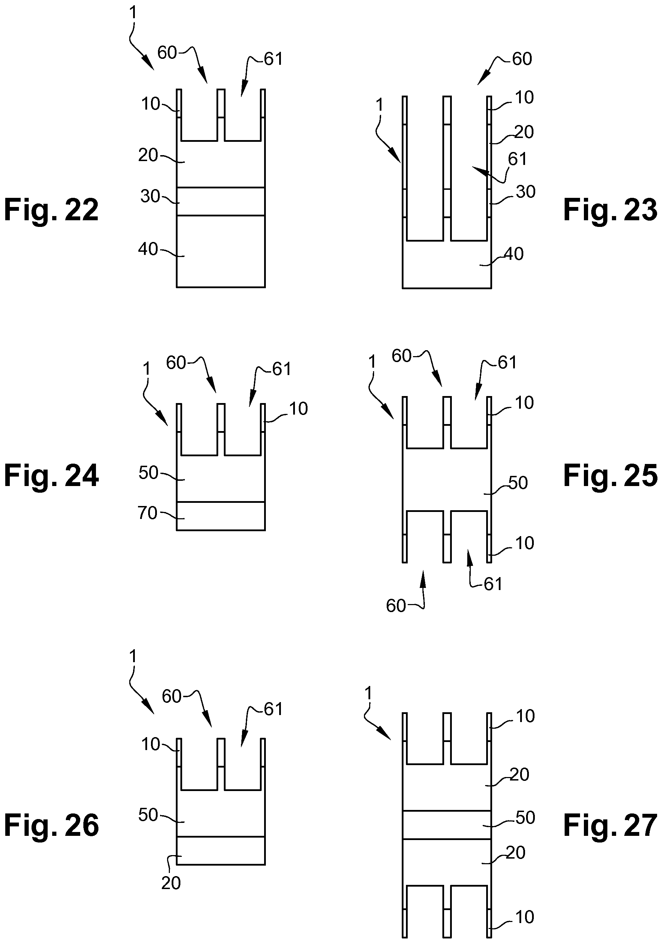

Sur la figure 22, le dispositif (1) comprend un empilement de quatre couches de revêtement (10, 20, 30, 40). De préférence, les couches (10, 30) sont constituées d'un premier matériau, tandis que les couches (20, 40) sont constituées d'un second matériau différent du premier matériau, en alternance. Les couches (10-40) peuvent être déposées sur un substrat, non représenté dans un but de simplification. Les cavités (61) sont formées uniquement dans les couches de revêtement (10, 20), orientées du côté supérieur, recevant le rayonnement incident. Dans le cas d'un dispositif (1) antireflet large-bande multicouches, cette solution permet d'améliorer la correction du front d'onde, en comparaison avec un dispositif multicouches non texturé. Egalement, cette solution représente un gain de temps par rapport à un dispositif multicouches dont toutes les couches (10-40) sont traversés par les cavités (61), comme décrit ci-après.

Sur la figure 23, le dispositif (1) comprend aussi un empilement de quatre couches de revêtement (10, 20, 30, 40). Les couches (10-40) peuvent être déposées sur un substrat, non représenté dans un but de simplification. Les cavités (61) traversent entièrement l'empilement excepté la dernière couche (40), qui est creusée partiellement.

Sur la figure 24, le dispositif (1) comprend une couche arrière (70) réalisée dans un matériau différent du substrat (50) et de la couche de revêtement (10). Le revêtement (10) est formé sur un premier côté du substrat (50), tandis que la couche arrière (70) est formée sur un second côté du substrat (50) opposé au premier côté. La couche arrière (70) a une fonction différente de la couche de revêtement (10). Par exemple, dans le cas d'un dispositif (1) antireflet, cette couche arrière (70) peut assurer des fonctions antireflet et mécanique sur la face arrière, tandis que la couche de revêtement (10) a une fonction antireflet large bande. Selon un autre exemple, dans le cas d'un dispositif (1) miroir, cette couche arrière (70) peut être conçue pour réfléchir une partie des rayonnements.

Sur la figure 25, le dispositif (1) comprend deux faces configurées selon l'invention, avec un substrat (50) central. Chaque face comporte une couche de revêtement (10) et une texturation (60), formant des cavités (61) qui traversent la couche de revêtement (10) et pénètrent partiellement le substrat (50). Les deux couches de revêtement (10) peuvent être identiques ou différentes (matériaux, épaisseurs, etc).

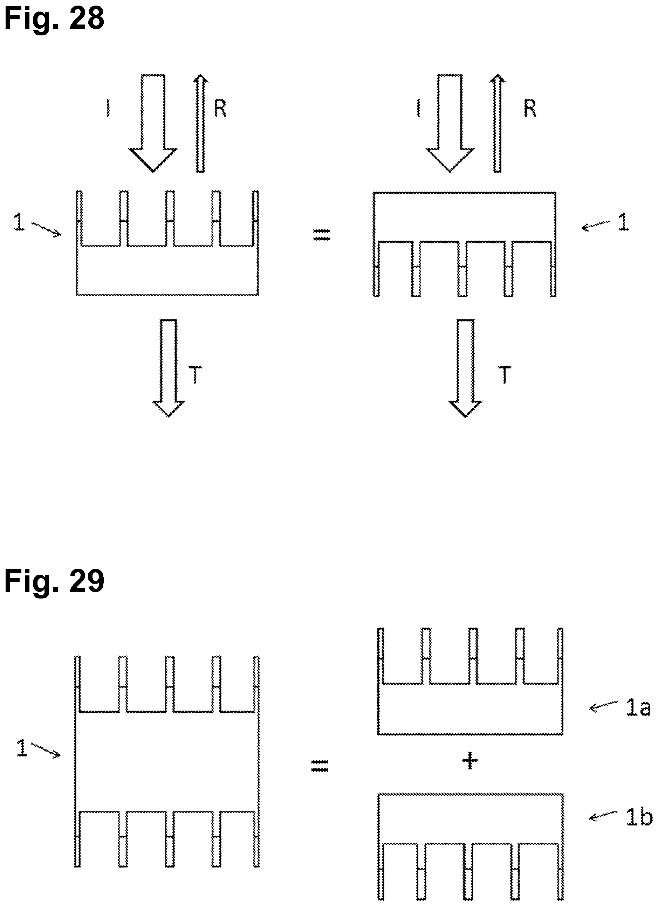

Comme illustré sur la figure 28, dans le cas où il n'y a pas d'ordre de diffraction, le comportement d'une surface du dispositif (1) ne dépend pas de la direction du chemin optique. C'est-à-dire que la direction de passage de la lumière depuis l'air vers le dispositif (1) ou depuis le dispositif (1) vers l'air ne change pas les taux de réflexion et de transmission du dispositif (1). La figure 28 montre de façon schématique que dans ces conditions, quel que soit le sens du dispositif (1), alors pour un rayonnement optique incident (I), les rayonnements optiques réfléchi (R) et transmis (T) sont les mêmes.

De plus, comme illustré sur la figure 29, si la longueur de cohérence de la lumière ne dépasse pas l'épaisseur du dispositif (1), alors le dispositif (1) illustré à la figure 25 peut être considéré comme l'assemblage de deux dispositifs simples (1a, 1b) indépendants que l'on aurait juxtaposés. Le taux de transmission du dispositif (1) illustré est alors la multiplication des taux de transmissions de ces deux dispositifs simples indépendants.

Cette configuration permet d'augmenter la performance du dispositif (1), puisque le système optique se trouve ainsi équipé d'un double dispositif de correction de front d'onde. Cette solution est avantageuse pour améliorer la correction du front d'onde, car elle permet d'utiliser les deux faces d'un même dispositif (1) pour corriger correctement le front d'onde deux fois, au lieu de rajouter un deuxième dispositif en complément du premier. L'encombrement global reste modéré.

Sur la figure 26, le dispositif (1) comprend une première face configurée selon l'invention, avec une couche de revêtement (10) et une texturation (60) pénétrant partiellement dans le substrat (50), et une deuxième face avec une couche de revêtement (10) qui est dépourvue de texturation, ou dépourvue de traitement, ou reçoit un traitement différent de la texturation de la première face. Conformément aux explications données ci-dessus, en référence aux figures 25, 28 et 29, cette configuration permet de disposer de l'équivalent de deux dispositifs (1) complémentaires. La deuxième face étant adaptée en terme de traitement ou de texturation, cette solution permet de choisir le ou les effets dont on veut disposer, pour une ou des gammes de longueur d'ondes. Dans un premier exemple, on peut appliquer des traitements différents dans une même gamme de longueur d'ondes, par exemple un traitement antireflet en V et un traitement antireflet large bande. Selon un deuxième exemple, on peut appliquer des traitements différents dans des gammes de longueur d'ondes différentes. Selon un troisième exemple, on peut appliquer un même traitement dans deux gammes de longueur d'ondes disjointes, juxtaposées ou chevauchantes. Si les deux gammes de longueur d'ondes traitées par chacune des faces sont juxtaposées ou chevauchantes, le dispositif (1) peut être utilisé pour traiter une gamme plus grande qu'avec un dispositif simple face. En alternative, si les deux gammes de longueur d'ondes traitées par chacune des faces sont disjointes, le dispositif (1) peut assurer le rôle d'un filtre. Selon une application particulière, on peut avoir un premier traitement de correction de front d'onde pour une première gamme de longueurs d'onde associée à un premier détecteur, et un second traitement de de correction de front d'onde pour une seconde gamme de longueurs d'onde associée à un second détecteur.

Sur la figure 27, le dispositif (1) comprend deux faces configurées selon l'invention, avec une couche de substrat (50) centrale. Chaque face comporte deux couches de revêtement (10, 20) et une texturation (60), formant des cavités (61) qui traversent la première couche de revêtement (10) et pénètrent partiellement la deuxième couche de revêtement (20). Les couches de revêtement (10, 20) des deux faces peuvent être identiques ou différents (matériaux, épaisseurs, etc).

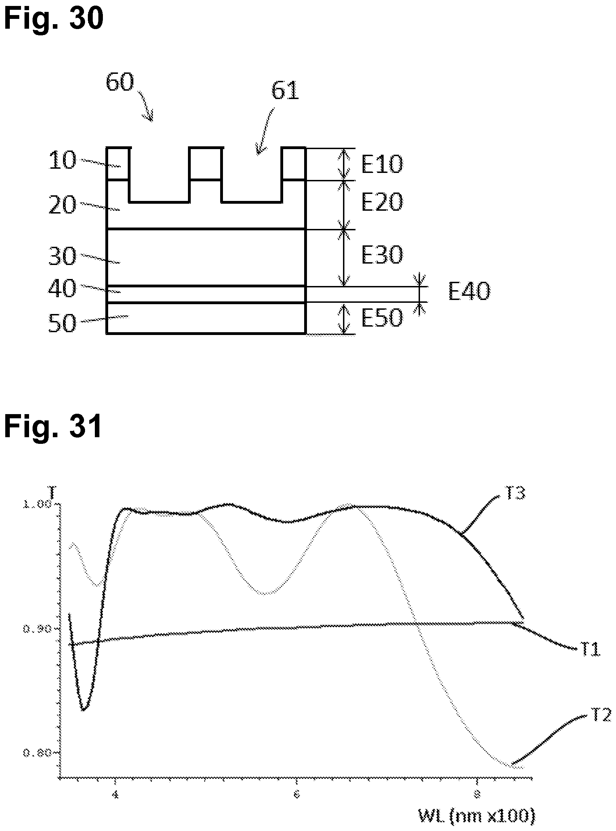

Sur la figure 30, le dispositif (1) comprend quatre couches de revêtement (10, 20, 30, 40) et un substrat (50). Les cavités (61) sont formées uniquement dans les couches (10+20), orientées du côté supérieur, recevant le rayonnement incident. A partir d'une telle configuration, plusieurs essais ont été réalisés.

Le premier essai concerne des longueurs d'ondes du domaine visible, comprises entre 350nm et 750nm. Le dispositif (1) est configuré de la manière suivante :
- les couches (10, 30) sont du SiO2, les couches (20, 40) sont du HfO2, et le substrat (50) est du ZnSe ;
- la première épaisseur de revêtement (E10) mesure 98 nm ;
- la deuxième épaisseur de revêtement (E20) mesure 409 nm ;
- la troisième épaisseur de revêtement (E30) mesure 174 nm ;
- la quatrième épaisseur de revêtement (E40) mesure 73 nm ;
- l'épaisseur de la couche de substrat (50) n'est pas imposée ;
- les cavités (61) de la texturation (60) ont une profondeur de 377 nm, traversant ainsi la première couche de revêtement (10) et creusant partiellement la deuxième couche de substrat (20). Les cavités (61) sont circulaires de diamètre 138 nm, et distribuées régulièrement selon une matrice carrée de pas 174 nm.

La figure 31 montre la courbe de transmission (T3) de ce dispositif (1), comparée :
- avec la courbe de transmission (T2) d'un dispositif comprenant le même empilement (10-50), mais sans texturation (60) ;
- avec la courbe de transmission (T1) d'un dispositif comprenant une unique couche de substrat (50) en carbone amorphe.

On y voit clairement que le dispositif (1) selon la configuration ci-dessus permet d'obtenir une transmission améliorée par rapport aux deux autres configurations, et sur une plage de longueur d'ondes beaucoup plus importante.

Le deuxième essai concerne des longueurs d'ondes du domaine proche infra-rouge, comprises entre 1 et 2 µm. Le dispositif (1) est configuré de la manière suivante :
- les couches (10, 30) sont du Si3N4, les couches (20, 40) sont du SiO2, et le substrat (50) est du ZnSe ;
- la première épaisseur de revêtement (E10) mesure 228 nm ;
- la deuxième épaisseur de revêtement (E20) mesure 452 nm ;
- la troisième épaisseur de revêtement (E30) mesure 461 nm ;
- la quatrième épaisseur de revêtement (E40) mesure 166 nm ;
- l'épaisseur de la couche de substrat (50) n'est pas imposée ;
- les cavités (61) de la texturation (60) ont une profondeur de 351 nm, traversant ainsi la première couche de revêtement (10) et creusant partiellement la deuxième couche de revêtement (20). Les cavités (61) sont circulaires de diamètre 255 nm, et distribuées régulièrement selon une matrice carrée de pas 320 nm.

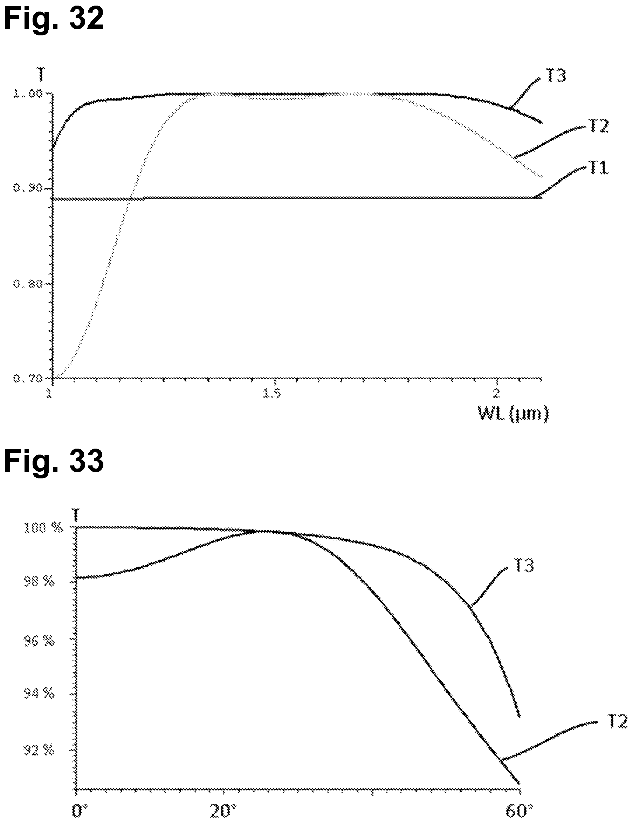

Les figures 32 et 33 montrent la courbe de transmission (T3) de ce dispositif (1), comparée :
- avec la courbe de transmission (T2) d'un dispositif comprenant le même empilement (10-50), mais sans texturation (60) ;
- avec la courbe de transmission (T1) d'un dispositif comprenant une unique couche de substrat (50) en ZnSe (uniquement sur la figure 32).

On voit clairement sur la figure 32 que le dispositif (1) selon la configuration ci-dessus permet d'obtenir une transmission améliorée par rapport aux deux autres configurations, et sur une plage de longueur d'ondes beaucoup plus importante.

On voit sur la figure 33 que selon l'angle d'incidence du rayonnement optique sur le dispositif (1), la transmission (T3) du dispositif (1) est améliorée par rapport à la transmission (T2).

Le troisième essai concerne des longueurs d'ondes du domaine moyen infra-rouge, comprises entre 7 et 15 µm. Le dispositif (1) est configuré de la manière suivante :
- les couches (10, 30) sont du TiO2, les couches (20, 40) sont du DLC, et le substrat (50) est du Si ;
- la première épaisseur de revêtement (E10) mesure 1393 nm ;
- la deuxième épaisseur de revêtement (E20) mesure 541 nm ;
- la troisième épaisseur de revêtement (E30) mesure 2843 nm ;
- la quatrième épaisseur de revêtement (E40) mesure 838 nm ;
- l'épaisseur de la couche de substrat (50) n'est pas imposée ;
- les cavités (61) de la texturation (60) ont une profondeur de 1934 nm, traversant ainsi la première couche de revêtement (10) et creusant partiellement la deuxième couche de revêtement (20). Les cavités (61) sont circulaires de diamètre 1600 nm, et distribuées régulièrement selon une matrice carrée de pas 2000 nm.

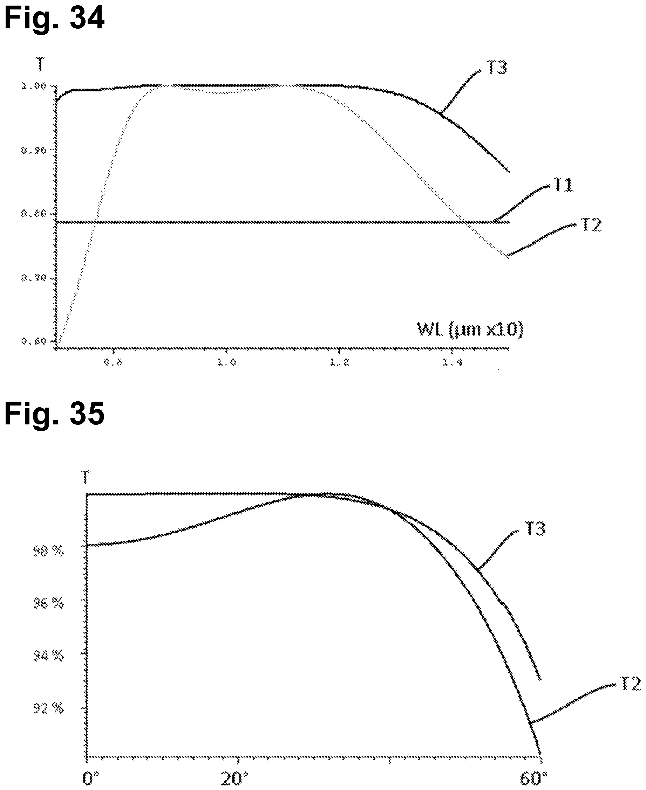

Les figures 34 et 35 montrent la courbe de transmission (T3) de ce dispositif (1), comparée :
- avec la courbe de transmission (T2) d'un dispositif comprenant le même empilement (10-50), mais sans texturation (60) ;
- avec la courbe de transmission (T1) d'un dispositif comprenant une unique couche de substrat (50) en Si (uniquement sur la figure 34).

On voit clairement sur la figure 34 que le dispositif (1) selon la configuration ci-dessus permet d'obtenir une transmission améliorée par rapport aux deux autres configurations, et sur une plage de longueur d'ondes beaucoup plus importante.

On voit sur la figure 35 que selon l'angle d'incidence du rayonnement optique sur le dispositif (1), la transmission (T3) du dispositif (1) est améliorée par rapport à la transmission (T2).

Le quatrième essai concerne également des longueurs d'ondes du domaine moyen infra-rouge, comprises entre 7 et 15 µm. Le dispositif (1) est configuré de la manière suivante :
- les couches (10, 30) sont du TiO2, les couches (20, 40) sont du DLC, et le substrat (50) est du Si ;
- la première épaisseur de revêtement (E10) mesure 1054 nm ;
- la deuxième épaisseur de revêtement (E20) mesure 2160 nm ;
- la troisième épaisseur de revêtement (E30) mesure 142 nm ;
- la quatrième épaisseur de revêtement (E40) mesure 1293 nm ;
- l'épaisseur de la couche de substrat (50) n'est pas imposée ;
- les cavités (61) de la texturation (60) ont une profondeur de 1968 nm, traversant ainsi la première couche de revêtement (10) et creusant partiellement la deuxième couche de revêtement (20). Les cavités (61) sont circulaires de diamètre 1600 nm, et distribuées régulièrement selon une matrice carrée de pas 2000 nm.

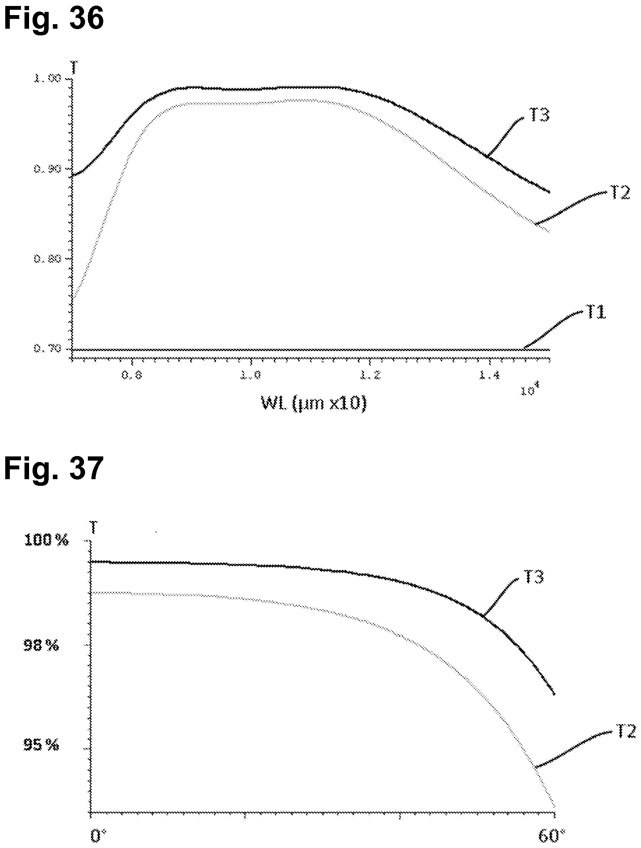

Les figures 36 et 37 montrent la courbe de transmission (T3) de ce dispositif (1), comparée :
- avec la courbe de transmission (T2) d'un dispositif comprenant le même empilement (10-50), mais sans texturation (60) ;
- avec la courbe de transmission (T1) d'un dispositif comprenant une unique couche de substrat (50) en Si (uniquement sur la figure 36).

On voit clairement sur la figure 36 que le dispositif (1) selon la configuration ci-dessus permet d'obtenir une transmission améliorée par rapport aux deux autres configurations, et sur une plage de longueur d'ondes beaucoup plus importante.

On voit sur la figure 37 que selon l'angle d'incidence du rayonnement optique sur le dispositif (1), la transmission (T3) du dispositif (1) est améliorée par rapport à la transmission (T2).

Par ailleurs, le dispositif (1) peut être conformé différemment des figures 1 à 37 sans sortir du cadre de l'invention, qui est défini par les revendications. En outre, les caractéristiques techniques des différents modes de réalisation et variantes mentionnés ci-dessus peuvent être, en totalité ou pour certaines d'entre elles, combinées entre elles. Ainsi, le dispositif (1) peut être adapté en termes de coût, de fonctionnalités et de performance.

## Revendications

1. Dispositif (1) optique de transmission / réflexion d'un rayonnement électromagnétique dans une gamme de longueur d'onde du spectre électromagnétique, ledit dispositif (1) comprenant au moins :
- une première couche de revêtement (10) réalisée dans un premier matériau,
- un substrat (50) réalisé dans un matériau différent du premier matériau, et
- une texturation de surface (60) formant des cavités (61) dans le dispositif (1) ;
où une couche inférieure (20 ; 50) disposée directement sous la première couche de revêtement (10) est soit une deuxième couche de revêtement (20) réalisée dans un matériau différent du premier matériau, soit le substrat (50) ;
où la couche inférieure (20 ; 50) présente une épaisseur (E20 ; E50) déterminée ;
les cavités (61) traversant la première couche de revêtement (10) et creusent la couche inférieure (20 ; 50) selon au moins une partie de l'épaisseur (E20 ; E50), le dispositif comprenant au moins une couche arrière (70) réalisée dans un matériau différent du substrat (50), la première couche de revêtement (10) étant formée sur un premier côté du substrat (50), la couche arrière (70) étant formée sur un second côté du substrat (50) opposé au premier côté,
**caractérisé *en* ce que** lesdites cavités (61) sont réparties sur la surface du dispositif (1) avec une périodicité variable, évoluant selon une règle définie et non de manière aléatoire.

2. Dispositif (1) selon la revendication 1, **caractérisé en ce que** le substrat (50) est la couche inférieure, et **en ce que** les cavités (61) traversent la première couche de revêtement (10) et creusent le substrat (50) selon une partie (P51) de l'épaisseur (E50).

3. Dispositif (1) selon la revendication 1, **caractérisé en ce que** le dispositif (1) comprend deux couches de revêtement (10, 20) disposées sur le substrat (50), à savoir la première couche de revêtement (10) et une deuxième couche de revêtement (20), et **en ce que** les cavités (61) traversent la première couche de revêtement (10) et creusent la deuxième couche de revêtement (20) selon une partie de l'épaisseur (E20), sans pénétrer dans le substrat (50).

4. Dispositif (1) selon la revendication 1, **caractérisé en ce que** le dispositif (1) comprend plusieurs couches de revêtement (10-40) empilées, incluant la première couche de revêtement (10) et au moins une deuxième couche de revêtement (20).

5. Dispositif (1) selon la revendication 4, **caractérisé en ce que** les cavités (61) traversent la première couche de revêtement (10) et creusent la deuxième couche de revêtement (20) selon une partie de l'épaisseur (E20).

6. Dispositif (1) selon la revendication 4, **caractérisé en ce que** les cavités (61) traversent toutes les couches de revêtement (10-40) empilées et creusent le substrat (50) selon une partie de l'épaisseur (E50).

7. Dispositif (1) selon l'une des revendications précédentes, **caractérisé en ce que** les cavités (61) présentent une section d'aire strictement décroissante en direction du substrat (50).

8. Dispositif (1) selon l'une des revendications précédentes 1 à 7, **caractérisé en ce qu'**il comprend deux faces, avec chacune une couche de revêtement (10 ; 80) et une texturation de surface (60) formant des cavités (61) traversant la couche de revêtement (10).

9. Dispositif (1) selon l'une des revendications précédentes 1 à 7, **caractérisé en ce qu'**il comprend une première face avec une première couche de revêtement (10) et une texturation de surface (60) formant des cavités (61) traversant la première couche de revêtement (10) et pénétrant partiellement le substrat (50), et une deuxième face avec une autre couche de revêtement (20) qui est dépourvue de texturation, ou dépourvue de traitement, ou reçoit un traitement différent de la texturation de la première face.

10. Dispositif (1) selon l'une des revendications précédentes, **caractérisé en ce que** les cavités (61) ont un profil continu en direction du substrat (50).

11. Dispositif (1) selon l'une des revendications précédentes, **caractérisé en ce que** les cavités (61) ont une section circulaire.

12. Procédé de fabrication d'un dispositif optique de transmission / réflexion d'un rayonnement électromagnétique dans une gamme de longueur d'onde du spectre électromagnétique, ledit procédé comprenant au moins les étapes suivantes :
- former au moins une combinaison d'une première couche de revêtement réalisée dans un premier matériau, et d'un substrat réalisé dans un matériau différent du premier matériau, puis
- réaliser une texturation de surface (60) formant des cavités (61) dans le dispositif (1) ;
où une couche inférieure (20 ; 50) disposée directement sous la première couche de revêtement (10) est soit une deuxième couche de revêtement (20) réalisée dans un matériau différent du premier matériau, soit le substrat (50) ;
où la couche inférieure (20 ; 50) présente une épaisseur (E20 ; E50) déterminée ;
les cavités (61) traversant la première couche de revêtement (10) et creusent la couche inférieure (20 ; 50) selon au moins une partie de l'épaisseur (E20 ; E50), le procédé comprenant une étape de formation d'au moins une couche arrière (70) réalisée dans un matériau différent du substrat (50), la première couche de revêtement (10) étant formée sur un premier côté du substrat (50), la couche arrière (70) étant formée sur un second côté du substrat (50) opposé au premier côté,
**caractérisé *en ce que*** les cavités (61) sont réparties sur la surface du dispositif (1) avec une périodicité variable, évoluant selon une règle définie et non de manière aléatoire, par exemple une périodicité différente entre le centre et les bords du dispositif (1).

## Patentansprüche

1. Optisches Übertragungs-/Reflexionsgerät (1) für elektromagnetische Strahlung in einem Wellenlängenbereich des elektromagnetischen Spektrums, wobei das Gerät (1) mindestens umfasst:
- eine erste Beschichtungsschicht (10) aus einem ersten Material,
- ein Substrat (50) aus einem anderen Material als das erste Material, und
- eine Oberflächentexturierung (60), die Kavitäten (61) im Gerät (1) bildet;
wobei eine untere Schicht (20; 50), die direkt unter der ersten Beschichtungsschicht (10) angeordnet ist, entweder eine zweite Beschichtungsschicht (20) aus einem anderen Material als das erste Material oder das Substrat (50) ist;
wobei die untere Schicht (20; 50) eine bestimmte Dicke (E20; E50) aufweist;
die Kavitäten (61) durchdringen die erste Beschichtungsschicht (10) und graben die untere Schicht (20; 50) gemäß mindestens einem Teil der Dicke (E20; E50),
das Gerät umfasst mindestens eine Rückschicht (70) aus einem anderen Material als das Substrat (50), wobei die erste Beschichtungsschicht (10) auf einer ersten Seite des Substrats (50) gebildet ist, die Rückschicht (70) auf einer zweiten Seite des Substrats (50) gebildet ist, die der ersten Seite gegenüberliegt, **dadurch gekennzeichnet, dass** die Kavitäten (61) auf der Oberfläche des Geräts (1) mit einer variablen Periodizität verteilt sind, die sich nach einer definierten Regel und nicht zufällig entwickelt.

2. Gerät (1) nach Anspruch 1, **dadurch gekennzeichnet, dass** das Substrat (50) die untere Schicht ist und dass die Kavitäten (61) die erste Beschichtungsschicht (10) durchdringen und das Substrat (50) gemäß einem Teil (P51) der Dicke (E50) graben.

3. Gerät (1) nach Anspruch 1, **dadurch gekennzeichnet, dass** das Gerät (1) zwei Beschichtungsschichten (10, 20) umfasst, die auf dem Substrat (50) angeordnet sind, nämlich die erste Beschichtungsschicht (10) und eine zweite Beschichtungsschicht (20), und dass die Kavitäten (61) die erste Beschichtungsschicht (10) durchdringen und die zweite Beschichtungsschicht (20) gemäß einem Teil der Dicke (E20) graben, ohne in das Substrat (50) einzudringen.

4. Gerät (1) nach Anspruch 1, **dadurch gekennzeichnet, dass** das Gerät (1) mehrere gestapelte Beschichtungsschichten (10-40) umfasst, einschließlich der ersten Beschichtungsschicht (10) und mindestens einer zweiten Beschichtungsschicht (20).

5. Gerät (1) nach Anspruch 4, **dadurch gekennzeichnet, dass** die Kavitäten (61) die erste Beschichtungsschicht (10) durchdringen und die zweite Beschichtungsschicht (20) gemäß einem Teil der Dicke (E20) graben.

6. Gerät (1) nach Anspruch 4, **dadurch gekennzeichnet, dass** die Kavitäten (61) alle gestapelten Beschichtungsschichten (10-40) durchdringen und das Substrat (50) gemäß einem Teil der Dicke (E50) graben.

7. Gerät (1) nach einem der vorhergehenden Ansprüche, **dadurch gekennzeichnet, dass** die Kavitäten (61) eine streng abnehmende Querschnittsfläche in Richtung des Substrats (50) aufweisen.

8. Gerät (1) nach einem der vorhergehenden Ansprüche 1 bis 7, **dadurch gekennzeichnet, dass** es zwei Seiten umfasst, wobei jede Seite eine Beschichtungsschicht (10; 80) und eine Oberflächentexturierung (60) aufweist, die Kavitäten (61) bildet, die die Beschichtungsschicht (10) durchdringen.

9. Gerät (1) nach einem der vorhergehenden Ansprüche 1 bis 7, **dadurch gekennzeichnet, dass** es eine erste Seite mit einer ersten Beschichtungsschicht (10) und einer Oberflächentexturierung (60) umfasst, die Kavitäten (61) bildet, die die erste Beschichtungsschicht (10) durchdringen und teilweise in das Substrat (50) eindringen, und eine zweite Seite mit einer anderen Beschichtungsschicht (20), die keine Texturierung aufweist, oder keinen Behandlung, oder eine andere Behandlung als die Texturierung der ersten Seite erhält.

10. Gerät (1) nach einem der vorhergehenden Ansprüche, **dadurch gekennzeichnet, dass** die Kavitäten (61) ein kontinuierliches Profil in Richtung des Substrats (50) haben.

11. Gerät (1) nach einem der vorhergehenden Ansprüche, **dadurch gekennzeichnet, dass** die Kavitäten (61) einen kreisförmigen Querschnitt haben.

12. Verfahren zur Herstellung eines optischen Übertragungs-/Reflexionsgeräts für elektromagnetische Strahlung in einem Wellenlängenbereich des elektromagnetischen Spektrums, wobei das Verfahren mindestens die folgenden Schritte umfasst:
- Bilden mindestens einer Kombination aus einer ersten Beschichtungsschicht aus einem ersten Material und einem Substrat aus einem anderen Material als das erste Material, dann
- Durchführen einer Oberflächentexturierung (60), die Kavitäten (61) im Gerät (1) bildet; wobei eine untere Schicht (20; 50), die direkt unter der ersten Beschichtungsschicht (10) angeordnet ist, entweder eine zweite Beschichtungsschicht (20) aus einem anderen Material als das erste Material oder das Substrat (50) ist;
wobei die untere Schicht (20; 50) eine bestimmte Dicke (E20; E50) aufweist;
die Kavitäten (61) durchdringen die erste Beschichtungsschicht (10) und graben die untere Schicht (20; 50) gemäß mindestens einem Teil der Dicke (E20; E50),
das Verfahren umfasst einen Schritt zur Bildung mindestens einer Rückschicht (70) aus einem anderen Material als das Substrat (50), wobei die erste Beschichtungsschicht (10) auf einer ersten Seite des Substrats (50) gebildet ist, die Rückschicht (70) auf einer zweiten Seite des Substrats (50) gebildet ist, die der ersten Seite gegenüberliegt, **dadurch gekennzeichnet, dass** die Kavitäten (61) auf der Oberfläche des Geräts (1) mit einer variablen Periodizität verteilt sind, die sich nach einer definierten Regel und nicht zufällig entwickelt, beispielsweise eine unterschiedliche Periodizität zwischen dem Zentrum und den Rändern des Geräts (1).

## Claims

1. A device (1) for transmitting/reflecting electromagnetic radiation in a wavelength range of the electromagnetic spectrum, said device (1) comprising at least:
- a first coating layer (10) made of a first material,
- a substrate (50) made of a material different from the first material, and
- a surface texturing (60) forming cavities (61) in the device (1);
where a lower layer (20; 50) disposed directly beneath the first coating layer (10) is either a second coating layer (20) made of a material different from the first material, or the substrate (50);
where the lower layer (20; 50) has a determined thickness (E20; E50);
the cavities (61) extending through the first coating layer (10) and excavating the lower layer (20; 50) according to at least a portion of the thickness (E20; E50),
the device comprising at least one back layer (70) made of a material different from the substrate (50), the first coating layer (10) being formed on a first side of the substrate (50), the back layer (70) being formed on a second side of the substrate (50) opposite the first side, **characterized in that** said cavities (61) are distributed over the surface of the device (1) with a variable periodicity, evolving according to a defined rule and not randomly.

2. The device (1) according to claim 1, **characterized in that** the substrate (50) is the lower layer, and **in that** the cavities (61) extend through the first coating layer (10) and excavate the substrate (50) according to a portion (P51) of the thickness (E50).

3. The device (1) according to claim 1, **characterized in that** the device (1) comprises two coating layers (10, 20) disposed on the substrate (50), namely the first coating layer (10) and a second coating layer (20), and **in that** the cavities (61) extend through the first coating layer (10) and excavate the second coating layer (20) according to a portion of the thickness (E20), without penetrating into the substrate (50).

4. The device (1) according to claim 1, **characterized in that** the device (1) comprises several stacked coating layers (10-40), including the first coating layer (10) and at least one second coating layer (20).

5. The device (1) according to claim 4, **characterized in that** the cavities (61) extend through the first coating layer (10) and excavate the second coating layer (20) according to a portion of the thickness (E20).

6. The device (1) according to claim 4, **characterized in that** the cavities (61) extend through all the stacked coating layers (10-40) and excavate the substrate (50) according to a portion of the thickness (E50).

7. The device (1) according to one of the preceding claims, **characterized in that** the cavities (61) have a strictly decreasing cross-sectional area towards the substrate (50).

8. The device (1) according to one of the preceding claims 1 to 7, **characterized in that** it comprises two faces, each with a coating layer (10; 80) and a surface texturing (60) forming cavities (61) extending through the coating layer (10).

9. The device (1) according to one of the preceding claims 1 to 7, **characterized in that** it comprises a first face with a first coating layer (10) and a surface texturing (60) forming cavities (61) extending through the first coating layer (10) and partially penetrating the substrate (50), and a second face with another coating layer (20) which is devoid of texturing, or devoid of treatment, or receives a treatment different from the texturing of the first face.

10. The device (1) according to one of the preceding claims, **characterized in that** the cavities (61) have a continuous profile towards the substrate (50).

11. The device (1) according to one of the preceding claims, **characterized in that** the cavities (61) have a circular cross-section.

12. A method for manufacturing an optical device for transmitting/reflecting electromagnetic radiation in a wavelength range of the electromagnetic spectrum, said method comprising at least the following steps:
- forming at least a combination of a first coating layer made of a first material, and a substrate made of a material different from the first material, then
- performing a surface texturing (60) forming cavities (61) in the device (1);
where a lower layer (20; 50) disposed directly beneath the first coating layer (10) is either a second coating layer (20) made of a material different from the first material, or the substrate (50);
where the lower layer (20; 50) has a determined thickness (E20; E50);
the cavities (61) extending through the first coating layer (10) and excavating the lower layer (20; 50) according to at least a portion of the thickness (E20; E50),
the method comprising a step of forming at least one back layer (70) made of a material different from the substrate (50), the first coating layer (10) being formed on a first side of the substrate (50), the back layer (70) being formed on a second side of the substrate (50) opposite the first side, **characterized in that** the cavities (61) are distributed over the surface of the device (1) with a variable periodicity, evolving according to a defined rule and not randomly, for example a periodicity different between the center and the edges of the device (1).
